# EUROPEAN PATENT APPLICATION

(11) **EP 2 317 713 A1**
(43) Date of publication of application: **04.05.2011**
(21) Application number: 09174630.5
(22) Date of filing: 30.10.2009
(51) Int. Cl.: H04L 25/03, H04L 27/26, H04L 1/00

(54) **Method and system for receiver adaptation based on knowledge of wireless propagation environments**

(60) Divisional application: 11152886.5
(71) Applicant: RESEARCH IN MOTION LIMITED, Waterloo, Ontario N2L 3W8 (CA)
(72) Inventor: Earnshaw, Mark, Kanata, ON K2K 3K1 (CA)
(74) Representative: Moore, Barry

(57) **Abstract**

A method and apparatus for receiver adaptation in a mobile device communicating with a network cell, the method determining propagation environment information at a processor of the mobile device; and configuring at least one of an algorithm and control parameters of a receiver of the mobile device utilizing the propagation environment information. Further, a method and apparatus for obtaining propagation environment information at a mobile device including: acquiring a cell identifier at the mobile device; and receiving propagation environment information corresponding to the acquired cell identifier.

## Description

### FIELD OF THE DISCLOSURE

The present disclosure relates to propagation environments for wireless cellular communications, and in particular, to receivers in various propagation environments.

### BACKGROUND

Wireless cellular communication devices must function well in a variety of propagation environments. For example, in dense urban propagation environments a large number of buildings may block a direct path between a base station and a mobile terminal and cause a number of reflections for the downlink wireless signal arriving at the mobile terminal. In suburban propagation environments, the environment consists of more widely spaced smaller buildings and it is generally easier to obtain a more direct line of sight to a cellular base station, causing fewer wireless signal reflections.

As part of receiver processing, propagation paths are tracked as observed by the receiver. However, new propagation paths may appear, especially in dense urban environments, as a mobile terminal moves. It is beneficial to identify the presence and location of such a new propagation path as quickly as possible, as the new propagation path may cause interference to the downlink signal that is currently being received, until the receiver is able to adjust the appropriate control parameters. Similarly, if a propagation path disappears, it is beneficial to identify this event as quickly as possible, in case the appropriate receiver parameters require adjustment.

### SUMMARY

The present disclosure provides a method for receiver adaptation in a mobile device communicating with a network cell, comprising: determining propagation environment information at a processor of the mobile device; and configuring at least one of an algorithm and control parameters of a receiver of the mobile device utilizing the propagation environment information.

The present disclosure still further provides a mobile device, comprising: a communications subsystem configured for communicating with a network cell, the communications subsystem including a receiver; and a processor, wherein the mobile device is configured to: determine propagation environment information at the processor; and configure at least one of an algorithm and control parameters of the receiver of the mobile device utilizing the propagation environment information.

The present disclosure further provides a method for obtaining propagation environment information at a mobile device comprising: acquiring a cell identifier at the mobile device; and receiving propagation environment information corresponding to the acquired cell identifier.

The present disclosure further provides a mobile device, comprising: a communications subsystem configured for communicating with a network cell, the communications subsystem including a receiver; and a processor, wherein the mobile device is configured to: acquire a cell identifier at the mobile device; and receive propagation environment information corresponding to the acquired cell identifier.

### BRIEF DESCRIPTION OF THE DRAWINGS

The present disclosure will be better understood with reference to the drawings, in which:
**Figure 1** is a top perspective view of an exemplary dense urban propagation environment;
**Figure 2** is a graph showing exemplary propagation path signals received and the power associated with each of the propagation path signals;
**Figure 3** is a top perspective view of an exemplary suburban propagation environment;
**Figure 4** is a graph showing exemplary propagation path signals received and the power associated with each of the propagation path signals;
**Figure 5** is a graph showing exemplary propagation paths in which a new propagation path appears;
**Figure 6** is a diagram showing positioning of a Fast Fourier Transform window in a system having two propagation paths;
**Figure 7** is a diagram showing positioning of a Fast Fourier Transform window when a new propagation path appears;
**Figure 8** is a block diagram showing a simplified exemplary orthogonal frequency divisional multiplexing receiver;
**Figure 9** is a block diagram showing a simplified exemplary Rake receiver;
**Figure 10** is a flow diagram illustrating a method for acquiring and applying propagation environment information;
**Figure 11** is a flow diagram illustrating alternatives for externally obtaining propagation environment information;
**Figure 12** is a flow diagram illustrating an alternative embodiment for obtaining propagation environment information; and
**Figure 13** is a block diagram of an exemplary mobile device capable of being used with the methods herein.

### DETAILED DESCRIPTION

In an orthogonal frequency division multiplexing (OFDM) receiver, a Fast Fourier Transform operation (FFT) is performed for decoding. The FFT window, which is equal in length to the overall OFDM symbol length minus the cyclic prefix length, is positioned such that copies of the following OFDM symbol do not interfere with the current OFDM symbol, provided that the relative delay between the first and last propagation paths does not exceed the time length of the cyclic prefix. Thus, the FFT window does not normally overlap any of the received copies of the following OFDM symbol. The avoidance of intersymbol interference via appropriate positioning of the FFT window is one feature of OFDM. However, when a new propagation path appears, the new propagation path may cause intersymbol interference in the current FFT window. The intersymbol interference degrades receiver performance and, as such, the receiver should identify the new propagation path as quickly as possible and then reposition the FFT window if necessary to avoid any intersymbol interference.

Tracking propagation paths observed by the receiver involves a tradeoff between performance and computational expense. In particular, the more frequently a check is made to determine whether one or more new propagation paths have appeared, the more quickly the receiver can react to the new propagation path(s). However, frequent checking for propagation paths requires greater computational processing and thus causes battery life drain. Conversely, less frequent checking for new propagation paths will cause the receiver to react more slowly on average to new propagation paths. However, less frequent checking reduces drain on the battery.

The present disclosure utilizes knowledge of current propagation environments in order to customize operation of certain wireless receiver components. Such customization includes, but is not limited to, the selection of specific algorithms and/or control parameter sets. For example, the performance of the downlink (DL) synchronizer and Fast Fourier Transform window positioner depends on knowledge of the environment. This information aids the component to compensate for changes in the environment by adjusting the Fast Fourier Transform window to the correct position and improves system performance by adjusting the time interval between successive update searches, and choosing a tracking algorithm to be used and its control parameters that have been optimized for the current propagation environment.

In a further embodiment, methods are provided by which the mobile terminal can obtain knowledge of the current wireless propagation environment. The mobile terminal may receive unique identifiers for a current cell from the base station as part of a transmitted signal. A lookup table may be stored in the mobile terminal, which maps the cell identifier with a propagation environment parameter. The table may be refreshed and updated as needed. If valid information for the cell is already stored in the mobile terminal, the mobile terminal may use it. If the local lookup table does not have propagation environment information for the cell, the mobile terminal may obtain the information externally. Obtaining information may be done in a variety of ways, including but not limited to signaling bits specifying the environment being broadcasted by a transmitter, external databases that store unique identifiers and corresponding environment parameters, the utilization of global positioning systems (GPS) and external databases to receive the information, among others. The information can then be used to configure relevant physical layer components.

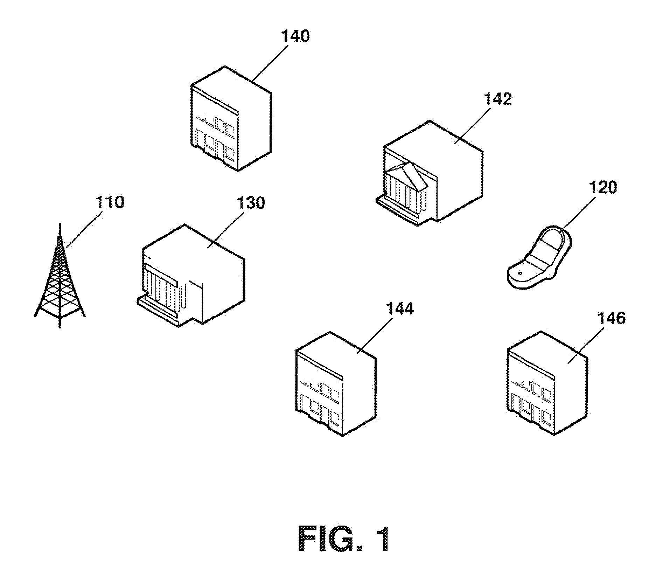

Reference is now made to **Figure 1. Figure 1** shows an example of a dense urban propagation environment that includes a number of large buildings. For example, the downtown of any major urban center such as New York City may be considered to be a dense urban propagation environment. As seen in **Figure 1****,** a base station **110** communicates with a mobile terminal **120.** However, due to one or more buildings such as building **130,** a direct line of sight does not exist between base station **110** and mobile terminal **120.** The propagation path will then involve reflections, for example, off of various buildings such as buildings **140, 142, 144** or **146** in order to reach mobile terminal **120.**

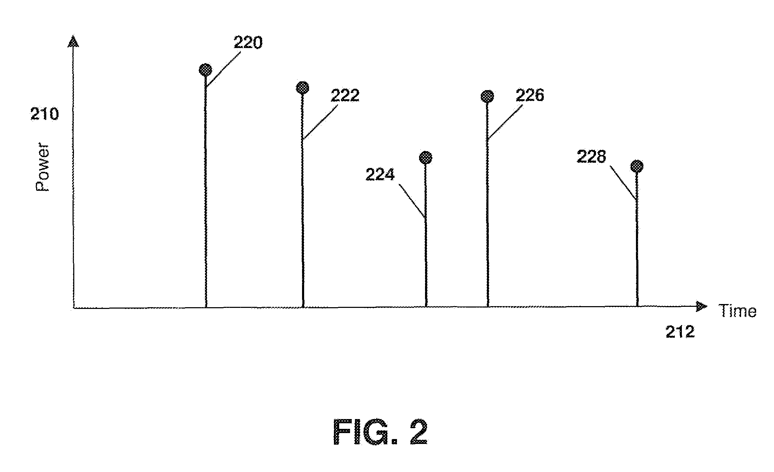

Referring to **Figure 2, Figure 2** shows an example of the propagation path signals that may arrive at the mobile terminal in a dense urban environment. As seen, the vertical axis **210** represents the power of the signal received and the horizontal axis **212** represents the time at which the signal is received.

In the example of **Figure 2****,** five propagation paths for the same symbol reach a mobile terminal, such as mobile terminal **120** of **Figure 1****.** These paths are identified as paths **220, 222, 224, 226** and **228.**

As seen from **Figure 2****,** the paths have different times at which they reach mobile terminal **120** and have different powers for the signal that reaches the mobile terminal. However, in the example of **Figure 2****,** the relative path powers are all roughly within the same order of magnitude. This may be the result of all of the propagation paths corresponding to reflections of the original signal, with no direct line of sight path existing between the transmitter and receiver.

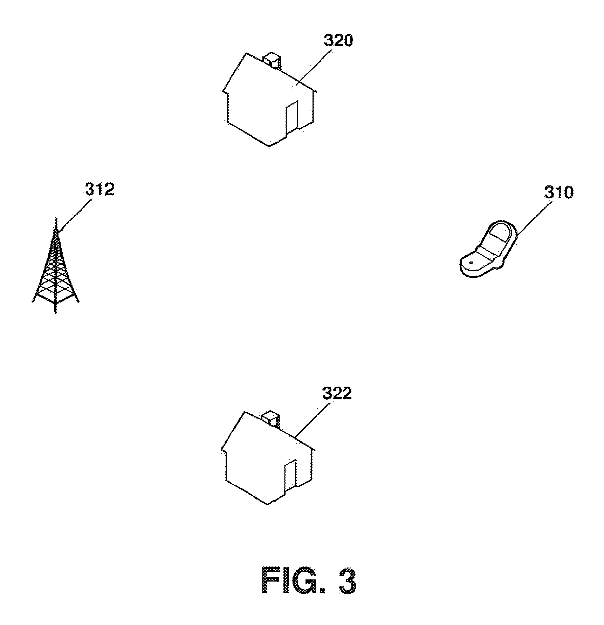

Referring to **Figure 3, Figure 3** shows an example of a suburban propagation environment in which buildings are more widely spaced and smaller, including, for example, housing. In this regard, it is generally easier to obtain a more direct line of sight between a base station **312** and a mobile terminal **310.** Various housing is shown as housing **320** and **322** in the example of **Figure 3****.**

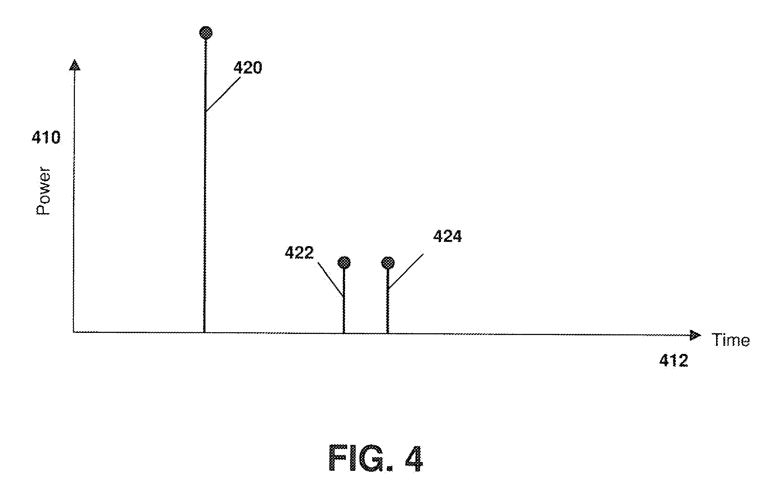

Example propagation paths for the suburban environment of **Figure 3** are shown with regard to **Figure 4****.** In **Figure 4****,** the vertical axis **410** represents the power of the signal received and the horizontal axis **412** represents the time at which the signals are received. As seen from **Figure 4** a dominant signal **420** is received at the mobile terminal. This likely represents a direct line of sight signal at the terminal. Further, signals **422** and **424** are received subsequently. These may be reflections off of various structures such as houses **320** or **322** from the example of **Figure 3****.**

In **Figure 4****,** received signals **422** and **424** have a weaker signal strength than signal **420** and arrive after a short time delay from the direct line of sight signal represented by signal **420.**

As seen from **Figures 1-4** above, the environment therefore plays a role in the number and relative strengths of propagation paths received by a mobile terminal.

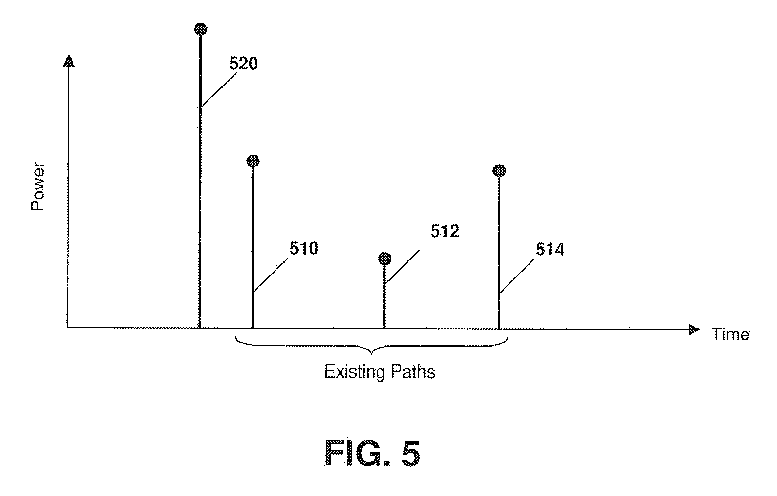

As part of receiver processing, different propagation paths as observed by the receiver are tracked. For example, reference is now made to **Figure 5****,** which shows an example of three existing propagation paths **510, 512** and **514,** which are being tracked by a mobile terminal.

A new propagation path suddenly appears as depicted by propagation path **520** in **Figure 5****.** Such appearance of a new propagation path could be a common occurrence in dense urban environments as a mobile terminal moves around. For example, a mobile terminal could move out from behind a large building and suddenly obtain a direct line of sight from the base station transmitter. The appearance of the new propagation path may cause interference to the downlink signal that is currently being received.

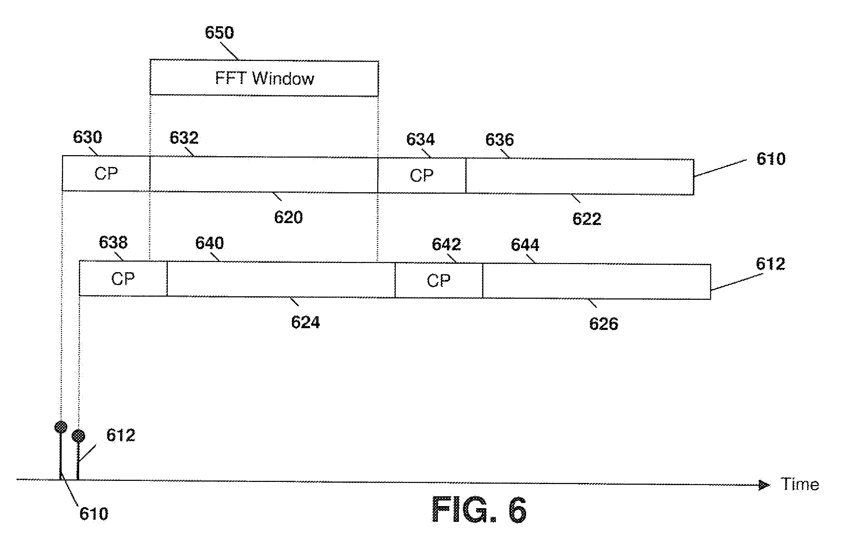

Reference is now made to **Figure 6. Figure 6** shows an example of an FFT operation in an OFDM receiver. Initially, two propagation paths exist, depicted as propagation paths **610** and **612.** Each propagation path has a plurality of consecutive OFDM symbols, shown for example as symbols **620** and **622** for propagation path **610** and symbols **624** and **626** for propagation path **612.** The data contents of symbols **620** and **624** are the same, as are the data contents of symbols **622** and **626.** Symbol **624** is essentially a time-delayed version of symbol **620,** resulting from a reflection in the wireless propagation environment. Each symbol such as symbol **620** includes a cyclic prefix **630** and a body of the symbol **632.** Similarly, symbol **622** has a cyclic prefix **634** and a body **636;** symbol **624** has a cyclic prefix **638** and a body **640;** and symbol **626** has a cyclic prefix **642** and a body **644.**

A Fast Fourier Transform window **650,** which is equal in length to the overall OFDM symbol length minus the cyclic prefix length, is positioned such that copies of the following OFDM symbol do not interfere with a current OFDM symbol. In other words, the Fast Fourier Transform window **650** does not overlap any of the received copies of the following OFDM symbols. This avoidance of intersymbol interference through the appropriate positioning of the Fast Fourier Transform window **650** is a feature of OFDM as discussed above.

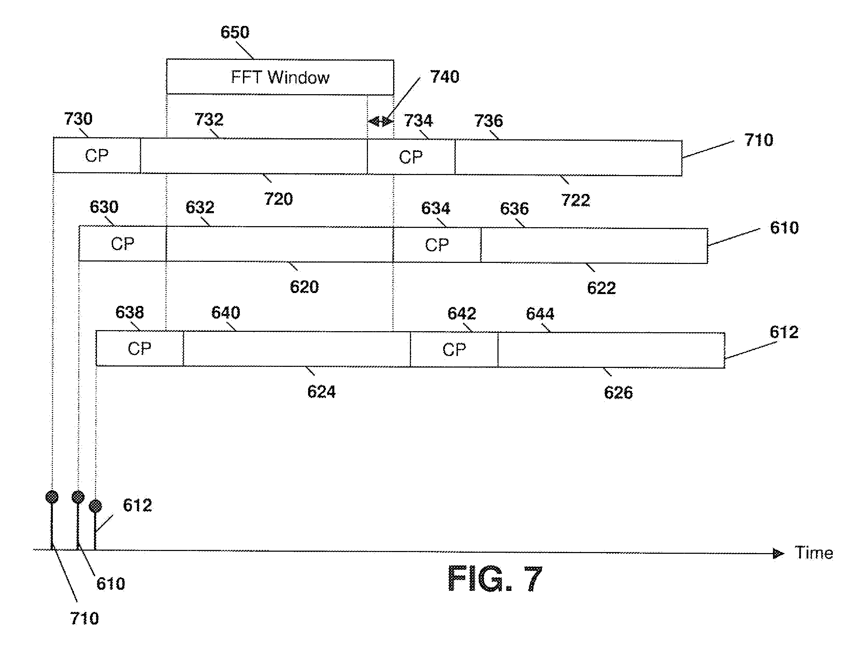

Reference is now made to **Figure 7****.** In **Figure 7****,** propagation paths **610** and **612** exist. However, a new propagation path **710** has appeared. As indicated, the Fast Fourier Transform window **650** is positioned such that intersymbol interference between propagation path **610** and propagation path **612** is avoided.

Propagation path **710** has various OFDM symbols that include a body and cyclic prefix. In the example of **Figure 7****,** two symbols **720** and **722** are shown. Each has a cyclic prefix, labeled **730** and **734,** and a body, labeled **732** and **736** respectively. Symbol **720** represents an earlier (in time) version of symbols **620** and **624,** all of which have the same data contents. For example, symbol **720** might result from a direct line of sight path between the transmitter and receiver, whereas symbols **620** and **624** might result from reflected versions of the original signal. These reflected copies cover a greater propagation distance than does the line of sight signal, and hence the reflected symbols arrive at the receiver with a relative time delay.

The appearance of the new propagation path **710** causes intersymbol interference since the new propagation path **710** has a portion of the second OFDM symbol's cyclic prefix **734,** as shown by arrow **740,** overlapping the FFT window position which is aligned with the first symbol **620.** Since cyclic prefix **734** belongs to a subsequent symbol, intersymbol interference results. The intersymbol interference degrades receiver performance. It is thus desirable for the receiver to identify the new propagation path quickly and reposition the FFT window **640** to avoid intersymbol interference.

As indicated above, the tracking of propagation paths observed by the receiver involves a tradeoff between performance and computational expense, with the latter directly affecting power consumption in a battery-powered mobile terminal. A propagation environment with a large number of reflectors such as a dense urban environment can cause rapid dynamic changes in one or more of the number, relative magnitudes, and relative positions of propagation paths as observed by a receiver. In such a situation, it is desirable to track changes quickly.

Conversely, in an environment with fewer reflectors such as in a suburban environment, the observed propagation paths would likely change less frequently and thus could be monitored less frequently. This results in less computation being required at a receiver and thus a power savings may be realized at the mobile terminal.

In addition, different path tracking algorithms may perform better in different propagation environments, and it may be beneficial to select a specific path tracking algorithm that has been customized for the current wireless propagation environment in order to obtain overall better performance in terms of both a higher probability of successfully decoding a downlink transmission and improved user satisfaction for use of the device.

The present disclosure provides for the customization of the operation of a wireless receiver component to account for the environment that the mobile device is in. For example, a specific algorithm may be selected, control parameters sets utilized, or both, by a receiver in a given environment.

In a further aspect of the present disclosure, methods by which the mobile terminal could obtain knowledge about the current wireless propagation environment are provided.

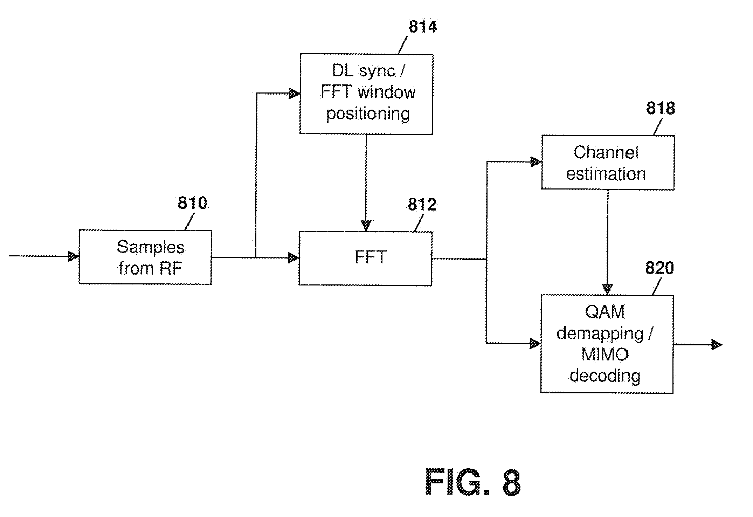

The present disclosure may be utilized with a variety of receivers. For example, referring to **Figure 8, Figure 8** shows the relevant receiver components for an OFDM receiver that may be affected by the methods and systems of the present disclosure. As will be appreciated by those in the art, a number of receiver components that are not relevant to the present disclosure have been omitted for simplicity.

As provided for above, the downlink synchronization and Fast Fourier Transform window positioning component requires knowledge of the position and other characteristics such as relative strengths of the observed propagation paths. If a new propagation path suddenly appears or an existing path disappears, the receiver must compensate for the event by possibly shifting the Fast Fourier Transform window position.

Knowledge of the propagation environment could aid in enhancing the performance of the receiver. For example, the Fast Fourier Transform window positioning component may have elements that can be varied based on knowledge of current propagation environments such as, but not limited to, the algorithm being used; the control parameters for the algorithm such as the size of the search window used when looking for new propagation paths; the time interval between successive searches for new propagation paths; and the exact positioning of a Fast Fourier Transform window relative to observed paths.

A wireless propagation environment that generally results in less dynamic channels would allow a longer time interval between successive update searches. Furthermore, if new paths are expected to appear frequently, the FFT window may be positioned differently than if the wireless propagation environment is such that new paths are expected to appear or existing paths to disappear less frequently.

Specific examples of different propagation environments and how certain physical layer receiver algorithms can be adapted to the current propagation environment include the following.

A dense urban propagation environment as shown in **Figure 1** will contain many buildings and other potential reflectors for wireless signals. Hence, the expected characteristics of the received signal may include: no dominant line of sight path, a relatively dynamic transmission channel (e.g. paths may appear, disappear, and move (relative to the time delays of other paths) more frequently than for a more static channel), and a large number of observed paths (due to a large number of reflected signals). For such an environment, a path tracker algorithm may need to run more often in order to maintain an accurate picture of the current transmission channel. Additionally, the path tracker algorithm may be optimized for the case where the observed paths are of relatively similar powers (i.e. no dominant line of sight path is present). If no observable line of sight path is present, it may be desirable to position the FFT window to include a certain period of time before the first observed path. Thus, if a line of sight path suddenly appears, this new path (which would have a shorter time delay than the reflected paths, and would hence appear earlier in time) would have a greater probability of already being included within the current FFT window position.

Conversely, a more suburban propagation environment, such as shown in **Figure 3****,** will contain fewer reflectors for wireless signals. Hence, the expected characteristics of the received signal may include: a dominant line of sight path from the transmitter, a more static transmission channel (e.g. paths may appear, disappear, and move (relative to the time delays of other paths) less frequently than for a more dynamic channel), and a small number of observed paths (due to a smaller number of reflected signals). For such an environment, a path tracker algorithm could run less often and yet still maintain an accurate picture of the current transmission channel. Additionally, the path tracker algorithm may be optimized for the case of a dominant line of sight path being present and hence not all of the other propagation paths would necessarily need to be identified (e.g. if the power of a reflected propagation path is only a small fraction of the power of the dominant line of sight path, then intersymbol interference resulting from the reflected path may be negligible and it may therefore not be necessary to track that particular path). If a line of sight path is present, it may be desirable to position the FFT window such that there is only a minimal time advance of the FFT window relative to the line of sight path. Any new paths that appear should be reflected paths (which would have a longer time delay than the line of sight path, and would hence appear later in time) and would therefore have a greater probability of already being included within the current FFT window position.

The channel estimation component and QAM demapping/MIMO decoding may also benefit from knowledge of current wireless propagation environments.

Referring to **Figure 8****,** samples are received and processed as shown by block **810.** The samples are provided to both the Fast Fourier Transform block **812,** as well as the downlink synchronization / Fast Fourier Transform window positioning block **814.** Knowledge from block **814** is provided to Fast Fourier Transform block **812** in order to properly position the Fast Fourier Transform window. Based on the decoding at block **812,** channel estimates from channel estimation block **818** are used for QAM demapping/MIMO decoding in block **820.**

As indicated above, the present disclosure may be utilized with various receiver types, and is not limited to OFDM receivers. The present disclosure could equally be utilized with any modulation scheme, including but not limited to, Code Division Multiple Access (CDMA), CDMA2000, wideband CDMA (WDCMA), Direct Sequence Spread Spectrum (DS-SS), time division multiple access (TDMA), as well as OFDM such as used in the Institute for Electrical and Electronic Engineers (IEEE) 802.16 specifications and the 3^{rd} Generation Partnership Project's (3GPP) E-UTRA (Evolved Universal Terrestrial Radio Access) / LTE (Long Term Evolution) specifications.

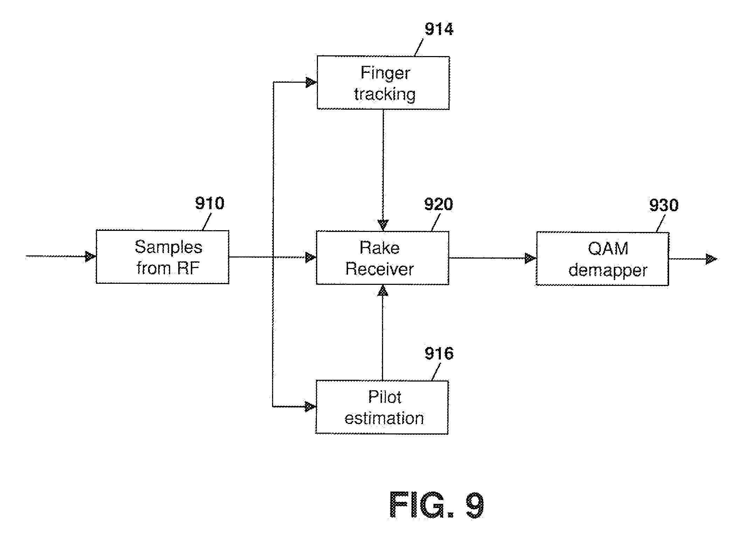

For example, in a CDMA type system, the receiver components may also be affected by the methods and systems of the present disclosure. Figure 9 shows a Rake receiver in which a number of components have been omitted for simplicity.

In a CDMA receiver such as a Rake receiver, each resolvable propagation path is typically tracked by a "finger" that collects the received signal energy from the propagation path. Any new paths that appear may have a receiver finger aligned with them to increase the total collected signal power. Similarly, any paths that disappear may be promptly identified to allow for the corresponding receiver finger to be removed.

As with the OFDM case of **Figure 8****,** knowledge of propagation environments may assist the receiver with predicting how quickly individual propagation paths might appear, disappear or shift positions. The information could be used to optimize finger tracking algorithms being used in each propagation environment.

As well, the pilot estimation in the QAM demapper component of a CDMA receiver may also benefit from knowledge of current propagation environments.

In **Figure 9****,** samples are provided from the radio frequency front end as shown in block **910.** The samples are then provided to finger tracking block 914, pilot estimation block **916** and to Rake receiver block **920.** Rake receiver **920** further receives input from finger tracking block **914** and pilot estimation block **916.**

The output of Rake receiver block **920** is provided to QAM demapper 930 which then provides the output signal to the remainder of the receiver for further processing.

The present disclosure thus provides for enhancement of performance and decrease in the power consumption of a receiver on a mobile device. Knowledge of the current wireless propagation environment allows the receiver to match the best algorithm, control parameter set, or both, to an expected channel behavior. This could enhance average performance of a mobile terminal by increasing the probability of successfully decoding a received signal, for example. Alternatively, if mobile devices are controlled by the network to a fixed operating point such as a fixed raw block error rate, then cell capacity could potentially be increased through the use of the present methods and systems since improved receiver performance would allow a higher modulation and code set to be used on average (for a given set of channel conditions), which would result in less transmission resources being consumed on a per-terminal basis.

Reducing power consumption, and thereby extending battery life, is one consideration for a mobile device. The present methods and systems may reduce total power consumption since relevant algorithms, for example, maintaining downlink synchronization for OFDM or finger tracking for CDMA, would not have to be over-engineered so that they could always handle the worst-case scenario. Specifically, if only one algorithm or one set of algorithm configuration parameters is used for a receiver, then this algorithm must be engineered to handle worst-case scenarios.

In such an over-engineered situation, an excessive number of computations may be performed in any propagation scenario that is less severe than a worst-case scenario. The present methods allow computation expense for certain receiver algorithms to be matched to the computation requirements for different propagation environments.

In a further embodiment, additional information, such as the speed at which a mobile terminal is travelling, may also be available and could be used to assist the customization of the configuration of specific receiver algorithms.

In a further aspect of the present disclosure, the acquisition of the wireless propagation environment information is provided.

As will be appreciated by those in the art, the propagation environment may be provided to the mobile device in a variety of ways. In one embodiment, the propagation environment may be stored locally or on a network and thus be accessible to a mobile device.

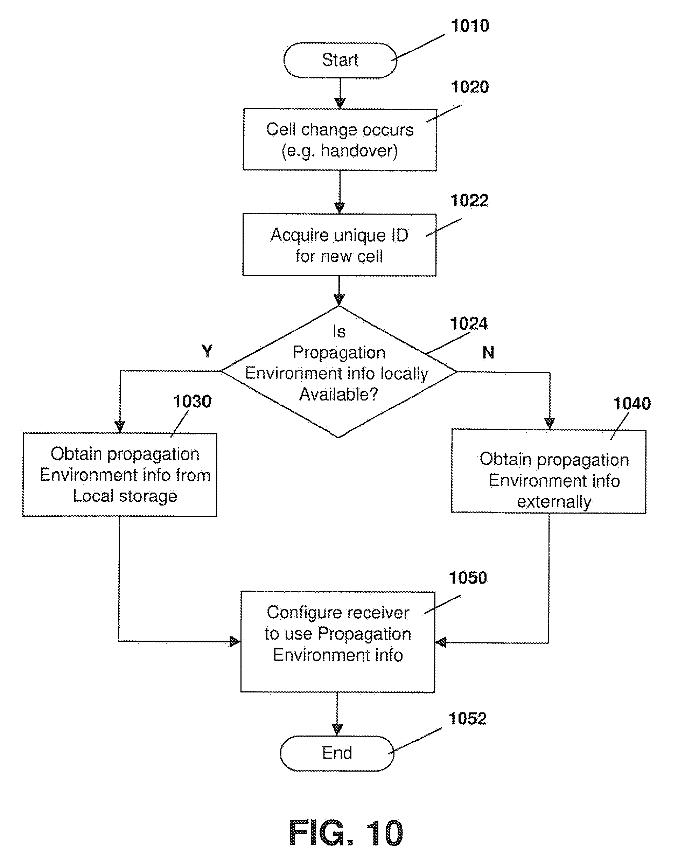

Reference is now made to **Figure 10****.** In **Figure 10****,** the process for acquiring network propagation environments is started at block **1010** and the process proceeds to block **1020** in which a cell change occurs. This may, for example, be a handover from one cell to another.

From block **1020,** the process proceeds to block **1022** in which the unique identifier for the new cell is acquired at the mobile device. As will be appreciated, the unique identifier may, for example, be a network identifier and cell identifier, or other similar identifier.

At block **1024,** a check is made to determine whether the propagation environment information for the unique identifier for the new cell is locally available on the mobile device. If yes, the process proceeds to block **1030** in which the propagation environment information for the cell is retrieved from local storage on the mobile device.

Conversely, if the propagation environment information is not locally available on the mobile device the process proceeds from block **1024** to block **1040** in which the propagation environment information is obtained externally. From blocks **1030** or **1040,** the process proceeds to block **1050** in which the receiver is configured to use the propagation environment information. As indicated above, this may be the selection of the specific algorithm for which the receiver uses to track propagation environment changes, or may involve changing channel parameters.

The process then proceeds to block **1052** and ends.

The above provides an assumption that the environmental information for a given cell is uniform for the cell. That is, the above assumes that each cell can be fairly represented by one type of propagation environment. In other embodiments, it is possible that a cell ID may be represented by a mix of two or more propagation environments.

The propagation environment information would therefore need to be obtained whenever a mobile terminal enters or is otherwise connected to a new cell. Such a situation could arise immediately following a handover from one base station to another, during a power on situation followed by an initial connection to a cell, during cell reselection while in an idle mode, among other situations.

The unique identifier identified in blocks **1022** could be, for example, a combination of the network identifier and a cell identifier or could be any other quantity that would uniquely identify a cell. Such means for uniquely identifying a cell would be known to those in the art.

The lookup in block **1030** may, for example, refer to a table in which a unique cell identifier is mapped to a propagation environment. An example of such a lookup table is provided below with regard to **Table 1.**

| **Unique Cell ID** | **Propagation Environment** |
|---|---|
| 1234 | Rural |
| 1372 | Dense urban |
| 1965 | Suburban |
| 1968 | Suburban |

**Table 1** provides an example of a lookup table maintained locally within a mobile terminal which links unique cell identifiers with their corresponding propagation environments. The example lists four known cells that cover a range of different propagation environments. As would be appreciated by those skilled in the art, the exact lookup table in an actual implementation would generally contain more entries since each cell encountered by a mobile terminal could be stored here, subject to memory limitations. The use of only four unique cell identifiers is thus meant as an example and is not meant to be limiting.

Furthermore, entries that have not been used for a certain period of time could be discarded in order to limit growth and overall size of the table, to ensure that information is refreshed at regular intervals, or both. Thus, for example, if a mobile device has not looked up the propagation environment for a cell identifier for, for example, one week, this may indicate that the propagation environment for that cell identifier should be discarded and the mobile device should instead proceed to block **1040** to obtain the propagation environment for that cell identifier when that cell is next encountered.

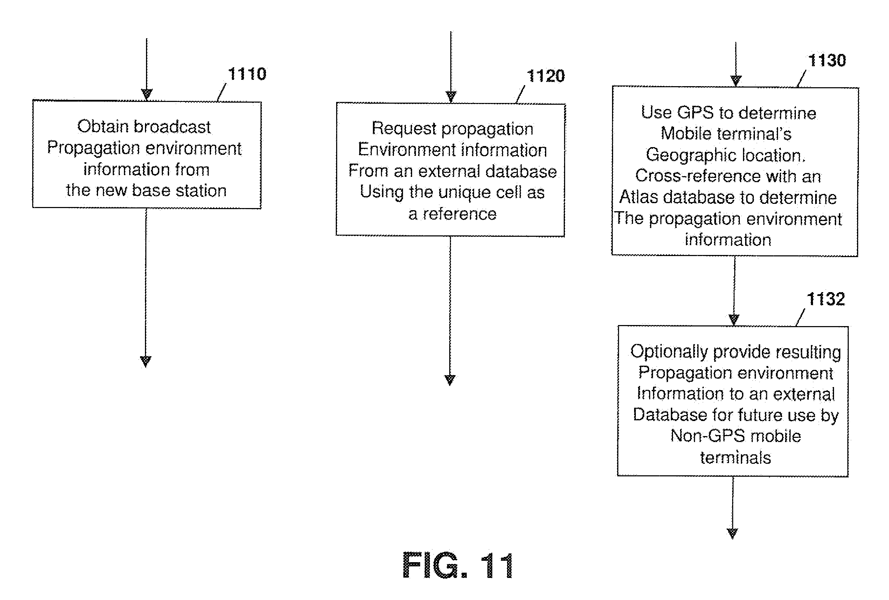

Block **1040** could occur in a variety of ways. Reference is now made to **Figure 11****,** which shows three possible ways to obtain the propagation environment externally. A first embodiment involves broadcasting the propagation environment for the cell. The mobile device may obtain this information when connecting to the base station of the new cell. This is shown by block **1110.**

As will be appreciated by those skilled in the art, block **1110** provides that each base station would broadcast signaling bits that would specify the type of propagation environment that represents its geographic cell. The mobile terminal would receive this broadcast information and use it based on the embodiments described above.

The signaling bits may be limited to a specific number of bits to describe overall environments. Thus, referring to **Table 2** below, two bits may be used to signal for separate environments as indicated in the table. **Table 2** is only however, meant only to be exemplary and more types of environments could be used. Thus, three signaling bits could be used to identify one of eight propagation environments.

Signaling bits could be incorporated with general parameter information that is already broadcast by a base station. For example, the information may be system information blocks that are broadcast by the long term evolution (LTE), evolved-universal terrestrial radio access (E-UTRA) node B (eNB).

| **Signaled Bits** | **Propagation Environment** |
|---|---|
| 00 | Dense urban |
| 01 | Urban |
| 10 | Suburban |
| 11 | Rural |

In **Table 2** above, four examples are provided for the propagation environments. These include dense urban, urban, suburban and rural. The present disclosure is, however, not meant to be limited to these particular propagation environments, since other propagation environments might also be used. For example, in-building, rural (hilly), rural (mountainous), among others, may be additional environments. In addition, the wireless propagation environment of a cell could be represented as a mix of two different propagation environments. For example, a cell position on an edge of a downtown area might be represented as a mix of dense urban and urban propagation environments.

Such signaled bits could be, for example, used by the Radio Resource Control (RRC) at the mobile terminal to configure certain physical layer algorithms.

An alternative embodiment to the broadcast process of block **1110** may be a request for propagation environment information from an external database using a unique cell identifier as a reference. This is shown as block **1120**.

The external database could be a form of a giant lookup table, with similar nature to a local lookup table that the mobile terminal could maintain. In other words, **Table 1** could be expanded and stored at a network element to provide for lookup. As will be appreciated, the use of block **1120** would require a certain amount of signaling between the mobile device and each new cell encountered by the mobile device. However, as would also be appreciated, the mobile device would quickly be able to build up a local table of propagation environments associated with cells commonly encountered by that mobile device, significantly reducing the amount of future signaling needed to be performed.

In one embodiment, the external lookup table could be stored at a central network repository. In other embodiments, the lookup table could be distributed among network elements such as various regional servers. The regional servers may duplicate information in some embodiments. Thus the communication in block **1120** may occur with the nearest server or the server that the mobile device normally links with.

Communication with a server could occur as a single communication (such as one packet) in each direction. The messages may be included in other data and control plane traffic to further reduce the amount of signaling, bandwidth requirements and power requirements.

The signaling from the external database could use a limited number of bits, such as those indicated above with reference to **Table 2.**

In a further embodiment, the process of block **1040** could start at block 1130 in which a global positioning system (GPS) is used to determine the mobile terminal's geographical location. This GPS location could be cross-referenced with an atlas database to determine propagation environment information.

The process would then proceed to block **1132** in which the resulting propagation environment information could optionally be provided to an external database for future use by non-GPS mobile terminals. In this embodiment, the mobile terminal would be able to determine its position and the atlas database, which in one embodiment may be external, could then be queried to determine whether the current location is within a city or in the country and thus be a dense urban environment or a rural propagation environment. The mobile terminal would then be able to store a copy of the unique cell ID with a corresponding propagation environment for future reference so GPS positions would not need to be calculated on an ongoing basis. Additionally, as part of the querying process, the mobile terminal could provide the unique cell identifier to the external database in order to allow the database to build up the lookup table of unique cell identifiers and associated propagation environments.

In the event that the wireless propagation environment is locally available, information could be applied immediately. Conversely, if propagation environment information is obtained externally, it may be applied as soon as the information becomes available. That is, the physical layer could use a default set of appropriate physical layer receiver algorithms, configuration/control parameters, or both, whenever a new cell is encountered. As soon as the propagation environment information becomes available, the physical layer could then be dynamically reconfigured in order to make use of the information for optimal performance.

In a further embodiment, a mobile device may wish to validate locally stored propagation information or obtain propagation information (to be stored locally) for the current cell and/or other cells (e.g. neighboring cells). For example, the mobile device may be required to revalidate any locally stored propagation information following a certain period of time, in order to ensure that that information is still correct. In addition, a mobile device may wish to obtain propagation information for a neighboring cell that it currently does not possess. This would allow the mobile device to immediately adapt its physical layer algorithm configurations to match the propagation environment of that neighboring cell in the event of a handover, rather than having to wait and acquire the propagation information following the handover. In one embodiment, each cell may include propagation environment information for each of the neighboring cells within the broadcast neighbor cell list. In an alternative embodiment, a mobile device may use the cell identifiers obtained from the broadcast neighbor cell list to query an external database in order to obtain propagation environment information for the neighboring cells.

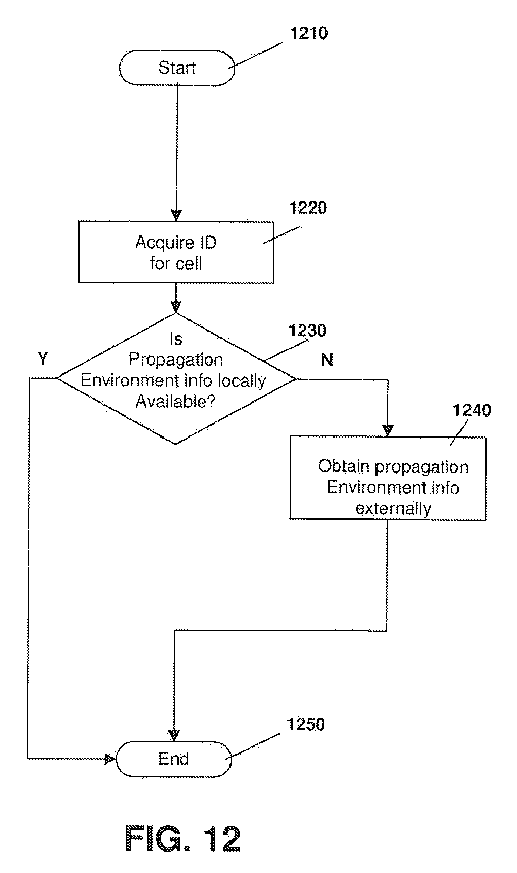

Referring to **Figure 12****,** the figure shows a flow diagram for the alternative embodiment. The process of **Figure 12** starts at block **1210** and proceeds to block **1220** in which an identifier is acquired for a cell. As indicated above, this may be an identifier for a neighboring cell to which the mobile terminal is currently connected, or it may be the identifier to which the mobile terminal is connected if information stored on the device needs to be refreshed.

From block **1220,** the process proceeds to block **1230** in which a check is made to determine whether the propagation environment information for the cell identifier is locally available. If yes, the process proceeds to block **1250** and ends. Otherwise the process proceeds to block **1240.**

In block **1240,** propagation environment information is obtained from an external source. The process of block **1240** could, for example, use the process of block **1120** from **Figure 11** to obtain the propagation environment information for a cell identifier from a global or regional database.

Alternatively the process of **Figure 12** could utilize the process of block **1110** from **Figure 11** if the broadcast information included propagation environment information about neighboring cells or if the desired broadcast information was obtained directly from the neighboring cells' signals by the mobile terminal. Block **1110** could also be used if the propagation environment information being obtained corresponds with the network cell the mobile terminal is connected to, for example during a refresh of propagation environment information in a local table.

Further, the process of block **1130** could be used if the GPS coordinates are used for the current cell the mobile terminal is connected to, or if the atlas lookup could associate neighboring cells with propagation environment information.

From block **1240** the process proceeds to block **1250** and ends.

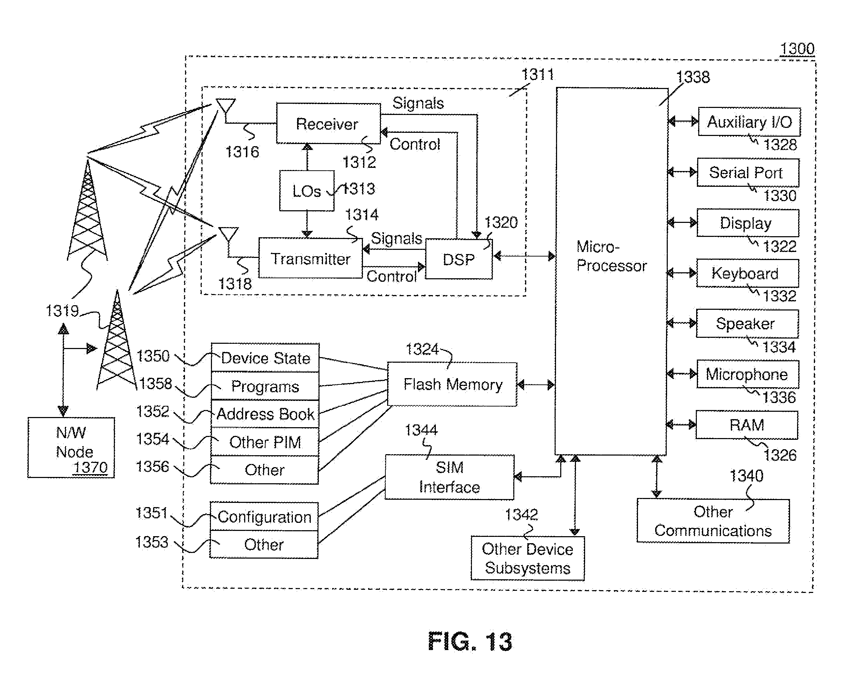

As will be appreciated, the above can be implemented on any mobile terminal. One exemplary mobile terminal is described below with reference to **Figure 13****.** This is not meant to be limiting, but is provided for illustrative purposes.

**Figure 13** is a block diagram illustrating a mobile terminal capable of being used with preferred embodiments of the apparatus and method of the present application. Mobile terminal **1300** is typically a two-way wireless communication device having voice communication capabilities. Depending on the exact functionality provided, the mobile device may be referred to as a wireless device, data messaging device, a two-way pager, a wireless e-mail device, a cellular telephone with data messaging capabilities, a wireless Internet appliance, a user equipment or a data communication device, as examples.

Where mobile terminal **1300** is enabled for two-way communication, it may incorporate a communication subsystem **1311,** including both a receiver **1312** and a transmitter **1314,** as well as associated components such as one or more, generally embedded or internal, antenna elements **1316** and **1318,** local oscillators (LOs) **1313,** and a processing module such as a digital signal processor (DSP) **1320.** As will be apparent to those skilled in the field of communications, the particular design of the communication subsystem **1311** will be dependent upon the communication network in which the device is intended to operate.

Network access requirements will also vary depending upon the type of network **1319.** A GSM or LTE mobile terminal may require a subscriber identity module (SIM) card in order to operate on the GSM, LTE or LTE-A network. The SIM interface **1344** is normally similar to a card-slot into which a SIM card can be inserted and ejected like a diskette or PCMCIA card. The SIM card may hold key configuration **1351,** and other information **1353** such as identification, and subscriber related information. For CDMA devices, a removable user identity module (R-UIM) may instead be used.

When required network registration or activation procedures have been completed, mobile terminal **1300** may send and receive communication signals over the network **1319.** As illustrated in **Figure 13****,** network **1319** can consist of multiple antennas communicating with the mobile terminal. These antennas are in turn connected to a network element **1370.**

Signals received by antenna **1316** through communication network **1319** are input to receiver **1312,** which may perform such common receiver functions as signal amplification, frequency down conversion, filtering, channel selection and the like, and in the example system shown in **Figure 13****,** analog to digital (A/D) conversion. A/D conversion of a received signal allows more complex communication functions such as demodulation and decoding to be performed in the DSP **1320.** In a similar manner, signals to be transmitted are processed, including modulation and encoding for example, by DSP **1320** and input to transmitter **1314** for digital to analog conversion, frequency up-conversion, filtering, amplification and transmission over the communication network **1319** via antenna **1318.** DSP **1320** not only processes communication signals, but also provides for receiver and transmitter control. For example, the gains applied to communication signals in receiver **1312** and transmitter **1314** may be adaptively controlled through automatic gain control algorithms implemented in DSP **1320.**

Mobile terminal **1300** generally includes a microprocessor **1338** which controls the overall operation of the device. Communication functions, including data and voice communications, are performed through communication subsystem **1311.** Microprocessor **1338** also interacts with further device subsystems such as the display **1322,** flash memory **1324,** random access memory (RAM) **1326,** auxiliary input/output (I/O) subsystems **1328,** serial port **1330,** one or more keyboards or keypads **1332,** speaker **1334,** microphone **1336,** other communication subsystem **1340** such as a short-range communications subsystem and any other device subsystems generally designated as **1342.** Serial port **1330** could include a USB port or other port known to those in the art.

Some of the subsystems shown in **Figure 13** perform communication-related functions, whereas other subsystems may provide "resident" or on-device functions. Notably, some subsystems, such as keyboard **1332** and display **1322,** for example, may be used for both communication-related functions, such as entering a text message for transmission over a communication network, and device-resident functions such as a calculator or task list.

Operating system software used by the microprocessor **1338** is generally stored in a persistent store such as flash memory **1324,** which may instead be a read-only memory (ROM) or similar storage element (not shown). Those skilled in the art will appreciate that the operating system, specific device applications, or parts thereof, may be temporarily loaded into a volatile memory such as RAM **1326.** Received communication signals may also be stored in RAM **1326.**

As shown, flash memory **1324** can be segregated into different areas for both computer programs **1358** and program data storage **1350, 1352, 1354** and **1356.** These different storage types indicate that each program can allocate a portion of flash memory **1324** for their own data storage requirements. Further, a table containing propagation environments may be stored in flash memory **1324.** Microprocessor **1338,** in addition to its operating system functions, preferably enables execution of software applications on the mobile terminal. A predetermined set of applications that control basic operations, including at least data and voice communication applications for example, may be installed on mobile terminal **1300** during manufacturing. Other applications could be installed subsequently or dynamically.

One software application may be a personal information manager (PIM) application having the ability to organize and manage data items relating to the user of the mobile terminal such as, but not limited to, e-mail, calendar events, voice mails, appointments, and task items. Naturally, one or more memory stores may be available on the mobile terminal to facilitate storage of PIM data items. Such PIM application would generally have the ability to send and receive data items, via the wireless network **1319.** In one embodiment, the PIM data items are seamlessly integrated, synchronized and updated, via the wireless network **1319,** with the mobile terminal user's corresponding data items stored or associated with a host computer system. Further applications may also be loaded onto the mobile terminal **1300** through the network **1319,** an auxiliary I/O subsystem **1328,** serial port **1330,** short-range communications subsystem **1340** or any other suitable subsystem **1342,** and installed by a user in the RAM **1326** or a non-volatile store (not shown) for execution by the microprocessor **1338.** Such flexibility in application installation increases the functionality of the device and may provide enhanced on-device functions, communication-related functions, or both. For example, secure communication applications may enable electronic commerce functions and other such financial transactions to be performed using the mobile terminal **1300.**

In a data communication mode, a received signal such as a text message or web page download will be processed by the communication subsystem **1311** and input to the microprocessor **1338,** which may further process the received signal for element attributes for output to the display **1322,** or alternatively to an auxiliary I/O device **1328.**

A user of mobile terminal **1300** may also compose data items such as email messages for example, using the keyboard **1332,** which is in one embodiment is a complete alphanumeric keyboard or telephone-type keypad, in conjunction with the display **1322** and possibly an auxiliary I/O device **1328.** Such composed items may then be transmitted over a communication network through the communication subsystem **1311.**

For voice communications, overall operation of mobile terminal 1300 is similar, except that received signals can be output to a speaker **1334** and signals for transmission may be generated by a microphone **1336.** Alternative voice or audio I/O subsystems, such as a voice message recording subsystem, may also be implemented on mobile terminal **1300.** Although voice or audio signal output may be accomplished primarily through the speaker **1334,** display **1322** may also be used to provide an indication of the identity of a calling party, the duration of a voice call, or other voice call related information for example.

Serial port **1330** in **Figure 13** would normally be implemented in a personal digital assistant (PDA)-type mobile terminal for which synchronization with a user's desktop computer (not shown) may be desirable, but is an optional device component. Such a port **1330** would enable a user to set preferences through an external device or software application and would extend the capabilities of mobile terminal **1300** by providing for information or software downloads to mobile terminal **1300** other than through a wireless communication network. The alternate download path may for example be used to load an encryption key onto the device through a direct and thus reliable and trusted connection to thereby enable secure device communication. As will be appreciated by those skilled in the art, serial port **1330** can further be used to connect the mobile terminal to a computer to act as a modem.

Other communications subsystems **1340,** such as a short-range communications subsystem, are a further component which may provide for communication between mobile terminal **1300** and different systems or devices, which need not necessarily be similar devices. For example, the subsystem **1340** may include an infrared device and associated circuits and components or a Bluetooth™ communication module to provide for communication with similarly enabled systems and devices. Subsystem **1340** may also be used for WiFi or WiMAX communications.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for receiver adaptation in a mobile device communicating with a network cell, comprising:
determining propagation environment information at a processor on the mobile device; and
configuring at least one of an algorithm and control parameters of a receiver of the mobile device utilizing the propagation environment information.

2. The method of claim 1, wherein the determining is performed based on acquisition of the network cell.

3. The method of claim 1 or claim 2, wherein the determining checks local storage on the mobile device to acquire propagation environment information for the network cell.

4. The method of any one of claims 1 to 3, wherein the algorithm is selected to respond to a likelihood of new propagation paths appearing based on the propagation environment information.

5. The method of claim 4, wherein the algorithm shifts a Fast Fourier Transform window in response to a new propagation path being detected.

6. The method of any one of claims 1 to 5, wherein the algorithm is optimized for propagation paths having similar relative strengths.

7. The method of any one of claims 1 to 6, wherein a frequency of execution of the algorithm is determined based on the propagation environment information.

8. The method of any one of claims 1 to 7, wherein the control parameters include at least one of a channel estimation component; a Quadrature Amplitude Modulation demapping parameter; and a multiple input, multiple output decoding parameter.

9. The method of claim 1, wherein the propagation environment information includes a propagation environment selected from the group consisting of a dense urban environment; a suburban environment; and a rural environment.

10. A mobile device, comprising
a communications subsystem configured for communicating with a network cell, the communications subsystem including a receiver; and
a processor,
wherein the mobile device is adapted to perform the method of any one of claims 1 to 9.

11. A method for obtaining propagation environment information at a mobile device comprising:
acquiring a cell identifier at the mobile device; and
receiving propagation environment information corresponding to the acquired cell identifier.

12. The method of claim 11, wherein the receiving utilizes a broadcast channel from a network cell or wherein the receiving is responsive to a query sent by the mobile device to a database on a network element for propagation environment information.

13. The method of claim 11 or claim 12, wherein the propagation environment information is received as a bit value associated with the propagation environment in a database.

14. The method of claim 11, wherein the receiving utilizes a global positioning system receiver to obtain a position of the mobile device, the method further comprising comparing the position of the mobile device with an atlas entry to determine the propagation environment information.

15. A mobile device, comprising
a communications subsystem configured for communicating with a network cell, the communications subsystem including a receiver; and
a processor,
wherein the mobile device is adapted to perform the method of any one of claims 11 to 14.

## Amended claims

### Amended claims in accordance with Rule 137(2) EPC.

**1.** A method for receiver adaptation in a mobile device communicating with a network cell, comprising:
receiving known propagation environment information at a processor on the mobile device; and
configuring at least one of an algorithm and control parameters of a receiver of the mobile device utilizing the known propagation environment information.

**2.** The method of claim 1, further comprising the step of receiving a cell identifier of the network cell at a processor on the mobile device prior to the receiving step, wherein the known propagation environment information received in the receiving step is associated with the cell identifier.

**3.** The method of claim 1 or claim 2, further comprising the step of checking local storage on the mobile device for known propagation environment information prior to the receiving known propagation environment information step, wherein if known propagation environment information is present in the local storage, then receiving this known propagation environment information from the local storage in the receiving known propagation environment information step.

**4.** The method of any one of claims 1 to 3, wherein the algorithm is selected to respond to a likelihood of new propagation paths appearing based on the known propagation environment information.

**5.** The method of claim 4, wherein the algorithm shifts a Fast Fourier Transform window in response to a new propagation path being detected.

**6.** The method of any one of claims 1 to 5, wherein the algorithm is optimized for propagation paths having similar relative strengths.

**7.** The method of any one of claims 1 to 5, wherein the algorithm is optimized for the presence of a dominant line of sight propagation path.

**8.** The method of any one of claims 1 to 4 wherein the algorithm is a downlink synchronization algorithm.

**9.** The method of any one of claims 1 to 4 wherein the algorithm is a finger tracking algorithm.

**10.** The method of any one of claims 1 to 9, wherein a frequency of execution of the algorithm is determined based on the known propagation environment information.

**11.** The method of any one of claims 1 to 10, wherein the control parameters include at least one of a channel estimation component; a Quadrature Amplitude Modulation demapping parameter; and a multiple input, multiple output decoding parameter.

**12.** The method of any one of claims 1 to 11 wherein the control parameters include at least a size of a search window.

**13.** The method of claim 1, wherein the known propagation environment information includes a propagation environment selected from a group consisting of a plurality of different propagation environments.

**14.** The method of claim 13, wherein the propagation environment is selected from the group consisting of a dense urban environment; a suburban environment; and a rural environment.

**15.** A mobile device (1300), comprising
a communications subsystem (1311) configured for communicating with a network cell, the communications subsystem (1311) including a receiver (1312); and
a processor (1320),
wherein the mobile device (1311) is adapted to perform the method of any one of claims 1 to 14.
